# EUROPEAN PATENT SPECIFICATION

(11) **EP 3 336 476 B1**
(45) Date of publication and mention of the grant of the patent: **03.04.2019**
(21) Application number: 17195672.5
(22) Date of filing: 10.10.2017
(51) Int. Cl.: F28F 9/00, F01N 5/02, F24H 8/00, F28F 9/24, F28D 7/08, F28D 21/00, F28F 1/08

(54) **LATENT HEAT EXCHANGER AND COMBUSTION APPARATUS WITH THE LATENT HEAT EXCHANGER**
LATENTER WÄRMETAUSCHER UND VERBRENNUNGSVORRICHTUNG MIT DEM LATENTEN WÄRMETAUSCHER
ÉCHANGEUR DE CHALEUR LATENTE ET APPAREIL DE COMBUSTION COMPORTANT L'ÉCHANGEUR DE CHALEUR LATENTE

(30) Priority: 15.12.2016 JP 2016243149
(43) Date of publication of application: 20.06.2018
(73) Proprietor: Rinnai Corporation, Nagoya-shi, Aichi 454-0802 (JP)
(72) Inventor: Asai, Yusuke, Aichi, 454-0802 (JP)
(74) Representative: Hofmann, Ralf U.

(56) References cited:
- WO-A1-2012/090619
- JP-A- 2015 124 920
- KR-B1- 101 569 829
- US-A1- 2014 090 827

## Description

### BACKGROUND OF THE INVENTION

### Field of the Invention

The present invention relates to a latent heat exchanger that condenses the water vapor in a combustion exhaust gas to recover latent heat, according to claim 1 and a combustion apparatus provided with the latent heat exchanger, according to claim 5.

### Description of the Related Art

Hitherto, there has been known a condensing type hot water supply apparatus provided with a sensible heat exchanger and a latent heat exchanger. The sensible heat exchanger absorbs the sensible heat of a combustion exhaust gas. The latent heat exchanger absorbs the latent heat of a combustion exhaust gas that has passed through the sensible heat exchanger.

In this type of latent heat exchanger, a heat absorbing pipe, which has a plurality of straight pipe portions formed by bending the pipe body thereof a plurality of times, is housed in a case main body. The heat absorbing pipe is provided such that the straight pipe portions are laid across an exhaust gas stream to recover the latent heat of a combustion exhaust gas.

The case main body of the latent heat exchanger is shaped like a box with an open top, and a top plate is attached to close the top. An exhaust gas inlet is formed on one side of the case main body, and an exhaust gas outlet is formed on the other side of the case main body. An exhaust gas stream is formed inside the case main body from the exhaust gas inlet to the exhaust gas outlet. The heat absorbing pipe is disposed across the exhaust gas stream.

Further, the top plate, which closes the top of the case main body, has a bead formed thereon, projecting upward from a flat panel section (refer to, for example, Japanese Patent Application Laid-Open No. 2013-79743).

The bead provided on the top plate not only makes it possible to improve the strength of the whole case by imparting rigidity to the top plate but also improves the heat exchange efficiency by generating a turbulence in the combustion exhaust gas passing at an upper level in the case.

However, when the combustion exhaust gas passes in the latent heat exchanger, the top plate of the latent heat exchanger produces noises in some cases. This has been a nuisance to a user.

JP 2015 124920 A shows a latent heat exchanger according to the preamble of claim 1. This latent heat exchanger comprises a lateral bead section which projects upward from the panel section and extends in a direction a long which the heat absorbing pipe is extendedly provided. The lateral bead section has one end thereof connected to the standing section of the panel section. Although the rigidity of the top plate is somehow improved by this, the top plate of the latent heat exchanger might still produce noises in some case also it would be desirable to further improve the efficiency of the latent heat exchanger.

### SUMMARY OF THE INVENTION

In view of the shortcoming described above, the present invention has been made to provide an improved latent heat exchanger and a combustion apparatus that suppress a noise produced by an exhaust gas.

This is achieved by a latent heat exchanger with the features of claim 1.

To this end, a latent heat exchanger in accordance with the present invention includes: a box-shaped case main body with an open top; an exhaust gas inlet formed on one side of the case main body; an exhaust gas outlet formed on the other side of the case main body; a heat absorbing pipe for recovering latent heat, which is extendedly provided across a stream of an exhaust gas directed from the exhaust gas inlet to the exhaust gas outlet in the case main body; and a top plate which closes the top of the case main body, wherein the top plate has a panel section, which has a rectangular shape in a planar view, a standing section formed along a peripheral edge of the panel section, and a lateral bead section which projects upward from the panel section and extends along the direction in which the heat absorbing pipe is extendedly provided, and the lateral bead section has each end thereof connected to the standing section.

A noise produced from the top plate of the latent heat exchanger is a resonance sound attributable to the coincidence between the natural frequency of the top plate of the latent heat exchanger and the frequency of the flame that generates the combustion exhaust gas. According to the present invention, therefore, the top plate has a higher level of stiffness, so that the value of the natural frequency of the top plate of the latent heat exchanger is increased.

In other words, according to the present invention, the top plate, which closes the top of the case main body, is provided with the lateral bead section connected to the standing section, thus dramatically improving the stiffness of the entire top plate, including the panel section of the top plate. Thus, the value of the natural frequency of the top plate increases and therefore the resonance with the flame frequency is suppressed. Hence, the resonance sound produced by the top plate can be reduced thereby to suppress the occurrence of the noises.

Further, the lateral bead section is extendedly provided in the direction in which the heat absorbing pipe is extended, i.e. in the direction crossing the stream of the exhaust gas, thus forming a turbulence of the exhaust gas at the position of the lateral bead section. With this arrangement, the exhaust gas stream and the heat absorbing pipe remain in contact with each other for a prolonged time with resultant improved thermal efficiency.

Further, according to an embodiment of the present invention, the top plate is provided with a longitudinal bead section which projects upward from the panel section and extends in a direction orthogonal to the direction in which the heat absorbing pipe extends, and the longitudinal bead section has one end thereof connected to the lateral bead section and the other end thereof connected to the standing section positioned adjacently to the exhaust gas outlet or the exhaust gas inlet.

According to an embodiment of the present invention, the lateral bead section and the longitudinal bead section are provided, being connected to the standing section, thereby improving the stiffness in a twisting direction of the top plate. This arrangement further increases the value of the natural frequency of the top plate, so that the resonance with the frequency of the flame burning at a higher load can be suppressed.

Preferably, the latent heat exchanger according to the present invention includes an additional longitudinal bead section, which projects upward from the panel section and extends in a direction orthogonal to the direction in which the heat absorbing pipe extends, one end of the additional longitudinal bead section being connected to the lateral bead section and the other end thereof being connected to the standing section positioned on the opposite side from the standing section to which the longitudinal bead section is connected.

With this arrangement, the stiffness of the top plate can be further improved, so that the value of the natural frequency of the top plate can be increased. This makes it
possible to reliably suppress the generation of the resonance sound, thus enabling the noises to be further reduced.

Further, each segment of the panel section, which is surrounded by the standing section and defined by the lateral bead section, the longitudinal bead section, and the additional longitudinal bead section, is preferably formed to have a same area.

With this arrangement, the stiffness of each segment of the panel section will be the same, providing uniform stiffness over the entire top plate. This enables the stiffness to be improved without increasing the number of bead sections.

A plurality of segments of the panel section having the same area can be formed by, for example, providing the lateral bead section, which extends toward the middle position between the standing section adjacent to the exhaust gas inlet of the top plate and the standing section adjacent to the exhaust gas outlet, and by providing the longitudinal bead section and the additional longitudinal bead section in continuity via the middle part of the lateral bead section.

Further, in the present invention, the lateral bead section is preferably formed at a position displaced to the exhaust gas outlet side or the exhaust gas inlet side with respect to a position right above the heat absorbing pipe.

If the lateral bead section were formed right above the heat absorbing pipe, then the gap right above the heat absorbing pipe would be increased due to the presence of the lateral bead section. This would cause a part of the exhaust gas stream to escape to the gap formed due to the lateral bead section when the exhaust gas stream comes in contact with the heat absorbing pipe, so that the contact of the exhaust gas stream with the heat absorbing pipe would be reduced. This may lead to deteriorated efficiency of heat exchange by the heat absorbing pipe.

In contrast, according to the present invention, the position of the lateral bead section is displaced from the position right above the heat absorbing pipe, so that the exhaust gas stream can be reliably brought into contact with the heat absorbing pipe by suppressing the escape of the exhaust gas stream, thus making it possible to prevent the deterioration of the heat exchange efficiency caused by providing the lateral bead section.

Further, a combustion apparatus in accordance with the present invention is provided with the latent heat exchanger having any one of the foregoing configurations. This makes it possible to provide the combustion apparatus that has the operational advantages of the foregoing latent heat exchanger and suppresses noises attributable to exhaust while securing heat exchange efficiency at the same time.

### BRIEF DESCRIPTION OF THE DRAWINGS

FIG. 1 is a perspective view illustrating the appearance of a latent heat exchanger of an embodiment of the present invention;
FIG. 2 is an exploded perspective view of the latent heat exchanger of the present embodiment;
FIG. 3 is an explanatory sectional view taken on line III-III of FIG. 1;
FIG. 4 is an explanatory sectional view illustrating a major section of the latent heat exchanger of the present embodiment;
FIG. 5 is a plan view illustrating a first modification example of a top plate;
FIG. 6 is a plan view illustrating a second modification example of the top plate;
FIG. 7 is a plan view illustrating a third modification example of the top plate; and
FIG. 8 is a plan view illustrating a top plate of a conventional latent heat exchanger.

### DESCRIPTION OF THE PREFERRED EMBODIMENTS

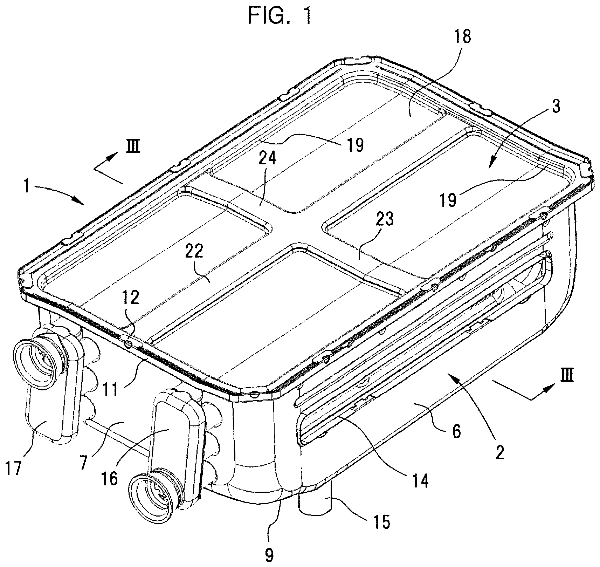

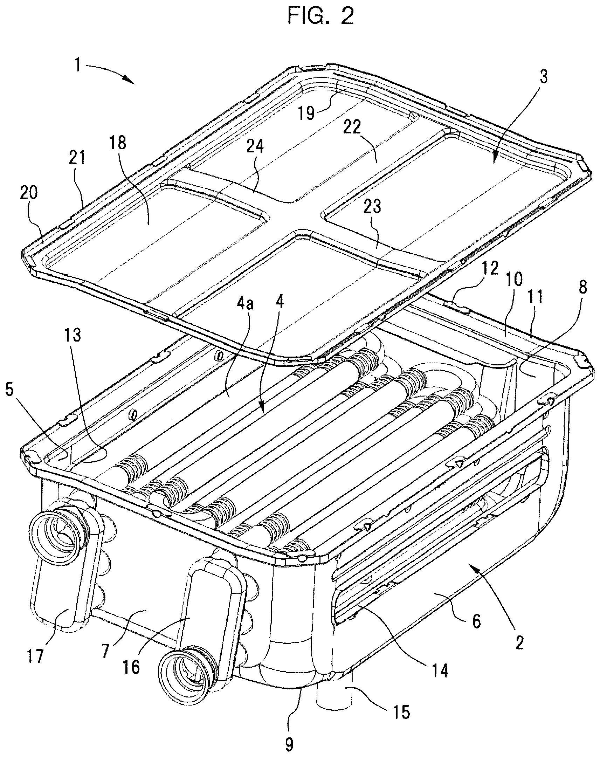

An embodiment of the present invention will be described with reference to the accompanying drawings. A latent heat exchanger 1 of the present embodiment illustrated in FIG. 1 and FIG. 2 is provided in a combustion apparatus of a gas water heater (not illustrated), and is adapted to recover the latent heat of a combustion exhaust gas obtained from a gas burner of the combustion apparatus and to supply the recovered latent heat to generate hot water. The latent heat exchanger 1 has a case main body 2 made of a thin metal plate and a top plate 3 which closes the top of the case main body 2. A plurality of heat absorbing pipes 4 are housed in the case main body 2.

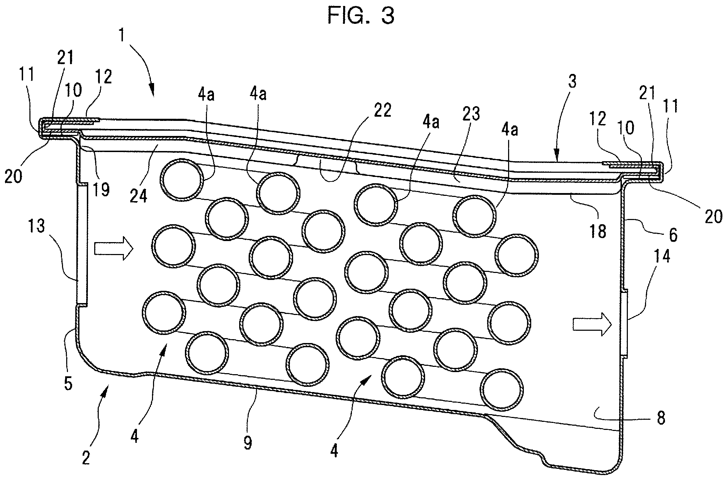

The case main body 2 is shaped like a box with an open top, and has a front wall 5, a rear wall 6, a one-side wall 7, an other-side wall 8, and a bottom wall 9, which are integrally formed by drawing a single metal plate, as illustrated in FIG. 2 and FIG. 3.

As illustrated in FIG. 2, a mounting section 10, which is bent in the horizontal direction to place the top plate 3 thereon, is formed at the upper edge of the case main body 2, and a plurality of hooks 12 are formed, with predetermined intervals provided thereamong, on an outer periphery flange 11, which is bent upward from the outer peripheral edge of the mounting section 10. The hooks 12 are provided to caulk the peripheral edge of the top plate 3.

Formed in the front wall 5 is a horizontally long rectangular exhaust gas inlet 13 through which a combustion exhaust gas is introduced. Formed in the rear wall 6 is a horizontally long rectangular exhaust gas outlet 14 through which the combustion exhaust gas is led out.

As illustrated in FIG. 3, the bottom wall 9 is tilted downward from the front wall 5 toward the rear wall 6 in order to smoothly discharge drain to the outside of the case main body 2 when the drain occurs. A drain outlet 15 for discharging the drain is provided at the lowermost position of the tilt, as illustrated in FIG. 2. The drain outlet 15 is connected to a neutralizer (not illustrated) through a drain discharge pipe (not illustrated).

As illustrated in FIG. 1 and FIG. 2, the upstream end and the downstream end of each of heat absorbing pipes 4 are exposed at the one-side wall 7. An inflow header 16 is connected to the upstream ends, and an outflow header 17 is connected to the downstream ends.

The top plate 3 includes a plate-like panel section 18, a standing section 19 formed by bending upward the entire peripheral edge of the panel section 18, a flat fringe section 20 formed by folding back the standing section 19 in the horizontal direction over the entire periphery of the standing section 19, and an inner periphery flange 21 formed by bending upward the outer periphery edge of the flat fringe section 20.

To close the top of the case main body 2 by the top plate 3, the flat fringe section 20 is seated on the mounting section 10 of the case main body 2, the inner periphery flange 21 is matched to and placed over the outer periphery flange 11 of the case main body 2, and each of the hooks 12 of the case main body 2 is bent inward to caulk the top plate 3. At this time, the standing section 19 of the top plate 3 comes in close contact with the inner surfaces of the front wall 5, the rear wall 6, the one-side wall 7, and the other-side wall 8 of the case main body 2, thus improving the stiffness of the top plate 3.

Further, formed on the top plate 3 are a lateral bead section 22 which projects upward from the panel section 18 and extends along straight pipe portions 4a of the heat absorbing pipes 4, a first longitudinal bead section 23 (a longitudinal bead section) which extends from the lateral bead section 22 toward the exhaust gas outlet 14, and a second longitudinal bead section 24 (an additional longitudinal bead section) which extends from the lateral bead section 22 toward the exhaust gas inlet 13.

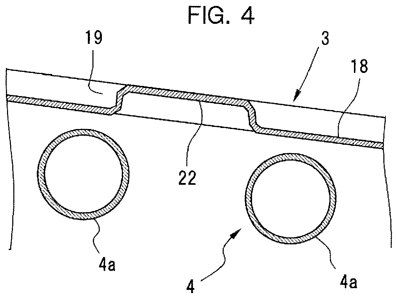

Referring to FIG. 4, the lateral bead section 22 is formed between two adjacent straight pipe portions 4a of the heat absorbing pipes 4. This means that the lateral bead section 22 is formed at a position displaced in the longitudinal direction (toward the exhaust gas outlet 14 side or the exhaust gas inlet 13 side) rather than being positioned right above the straight pipe portions 4a of the heat absorbing pipes 4. In the present embodiment, the axial centers of the two adjacent straight pipe portions 4a are displaced toward the exhaust gas outlet 14 side or the exhaust gas inlet 13 side with respect to the center in the width direction of the lateral bead section 22.

Thus, the space formed inside the lateral bead section 22 is formed, being displaced from the position right above the straight pipe portions 4a of the heat absorbing pipes 4, so that most of the exhaust gas stream directed toward the straight pipe portions 4a comes in contact with the straight pipe portions 4a rather than escaping into the space inside the lateral bead section 22. This makes it possible to prevent the heat exchange efficiency from deteriorating.

Further, the lateral bead section 22 has its both ends connected to the standing section 19. The first longitudinal bead section 23 has its one end connected to the center of the lateral bead section 22 and its other end connected to the standing section 19 near the exhaust gas outlet 14. The second longitudinal bead section 24 has its one end connected to the center of the lateral bead section 22 and its other end connected to the standing section 19 near the exhaust gas inlet 13. The first longitudinal bead section 23 and the second longitudinal bead section 24 are linearly formed in continuity through the lateral bead section 22.

The standing section 19 of the top plate 3 is in close contact with the inner surfaces of the front wall 5, the rear wall 6, the one-side wall 7, and the other-side wall 8 of the case main body 2 thereby to improve the stiffness of the entire top plate 3 as described above. The ends of the bead sections 22, 23, and 24 are connected to the standing section 19, thereby enabling the stiffness of the top plate 3 to be further improved.

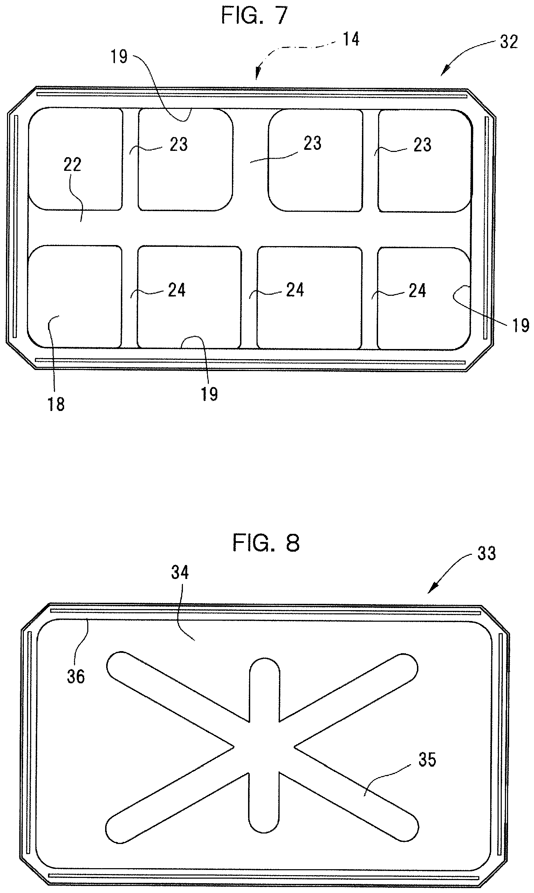

The natural frequency of a conventional top plate 33 illustrated in FIG. 8 and the natural frequency of the top plate 3 according to the present embodiment using the same material as that of the top plate 33 (refer to FIG. 1 or FIG. 2) were measured and compared. As illustrated in FIG. 8, the conventional top plate 33 is provided with a bead section 35 which projects upward from a panel section 34 and which has a radial shape. However, the bead section 35 is not in continuity with a standing section 36 formed on the peripheral edge of the panel section 34.

The result of the comparison indicates that the natural frequency of the conventional top plate 33 is 260 Hz, and the natural frequency of the top plate 3 of the present embodiment is 450 Hz, proving that the value of the natural frequency of the top plate 3 of the present embodiment has dramatically increased. Hence, the top plate 3 of the present embodiment that has the natural frequency of the high value minimizes the possibility of the resonance with a flame oscillation, so that the latent heat exchanger 1 using the top plate 3 is capable of suppressing the noises attributable to an exhaust gas.

Further, in the top plate 3 of the present embodiment, the four segments of the panel section 18 defined by the lateral bead section 22, the first longitudinal bead section 23, and the second longitudinal bead section 24, which are surrounded by the standing section 19, are formed to have the same area. This prevents a strain from being concentrated on any particular part of the top plate 3, thus enabling uniform stiffness to be obtained as a whole.

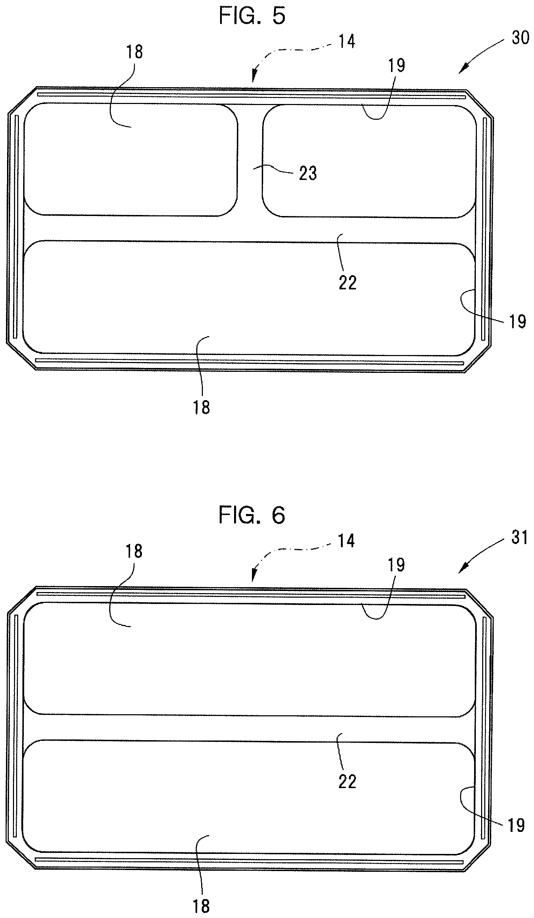

In addition to the top plate 3 of the present embodiment, the following will describe modification examples of top plates that provide the noise prevention effect. As a first modification example, a top plate 30 is illustrated in FIG. 5. The top plate 30 has a lateral bead section 22 and a first longitudinal bead section 23, but does not have a second longitudinal bead section 24. The top plate 30 of the first modification example also exhibits high stiffness and a natural frequency of approximately 380 Hz, thus making it possible to obtain the noise prevention effect that suppresses the resonance with a flame oscillation.

Although the top plate 30 of the first modification example has a lower value of natural frequency than that of the top plate 3 of the present embodiment, the top plate 30 is provided with only the first longitudinal bead section 23 positioned adjacently to an exhaust gas outlet 14, which is located at a position where a combustion exhaust gas passes after heat exchange progresses, thus advantageously suppressing the deterioration of the heat exchange efficiency, as compared with the top plate 3 of the present embodiment.

Further, FIG. 6 illustrates a top plate 31 as a second modification example. The top plate 31 is provided with neither a first longitudinal bead section 23 nor a second longitudinal bead section 24. The top plate 31 of the second modification example also exhibits high stiffness and a natural frequency of approximately 330 Hz, providing the noise prevention effect that suppresses the resonance with a flame oscillation. Further, the second modification example is provided with only a lateral bead section 22, so that variations in thickness can be reduced in a drawing process, thus making it possible to obtain the top plate 31 with minimized strain.

Further, FIG. 7 illustrates a top plate 32 as a third modification example. The top plate 32 is provided with a single lateral bead section 22 and a plurality of first longitudinal bead sections 23 and a plurality of second longitudinal bead sections 24. The top plate 32 of the third modification example also has high stiffness and a natural frequency of approximately 400 Hz, thus providing the noise prevention effect for suppressing the resonance with a flame oscillation. Further, the width dimensions (the dimensions in a direction orthogonal to longitudinal) of the lateral bead section 22, the first longitudinal bead sections 23, and the second longitudinal bead sections 24 are appropriately set according to the positions or the like of placement of the bead sections.

### Description of Reference Numerals

1 ... Latent heat exchanger; 2 ... Case main body; 3, 30, 31, 32 ... Top plate; 4 ... Heat absorbing pipe; 13 ... Exhaust gas inlet; 14 ... Exhaust gas outlet; 18 ... Panel section; 19 ... Standing section; 22 ... Lateral bead section; 23 ... First longitudinal bead section (Longitudinal bead section); and 24 ... Second longitudinal bead section (Additional longitudinal bead section)

## Claims

1. A latent heat exchanger (1) comprising:
a box-shaped case main body (2) with an open top; an exhaust gas inlet (13) formed on one side of the case main body (2); an exhaust gas outlet (14) formed on the other side of the case main body (2); a heat absorbing pipe (4) for recovering latent heat, which is extendedly provided across a stream of an exhaust gas directed from the exhaust gas inlet (13) to the exhaust gas outlet (14) in the case main body; and a top plate (3) which closes the top of the case main body (2),
wherein the top plate (3) has a panel section (18), which has a rectangular shape in a planar view, a standing section (19) formed along a peripheral edge of the panel section (13), and a lateral bead section (22) which projects upward from the panel section (18) and extends in a direction along which the heat absorbing pipe (4) is extendedly provided, **characterized in that**
the lateral bead section (22) has each end thereof connected to the standing section (19); and
the lateral bead section (22) is formed at a position displaced to the exhaust gas outlet side or the exhaust gas inlet side with respect to a position right above the heat absorbing pipe (14).

2. The latent heat exchanger according to claim 1,
wherein the top plate (3) has a longitudinal bead section (23) which projects upward from the panel section (18) and extends in a direction orthogonal to the direction in which the heat absorbing pipe (4) is extendedly provided, and
the longitudinal bead section (23) has one end thereof connected to the lateral bead section (22) and the other end thereof connected to the standing section (19) positioned adjacently to the exhaust gas outlet (14) or the exhaust gas inlet (13).

3. The latent heat exchanger according to claim 2, further comprising an additional longitudinal bead section (24), which projects upward from the panel section (18) and extends in a direction orthogonal to the direction in which the heat absorbing pipe (4) is extendedly provided, one end of the additional longitudinal bead section (24) being connected to the lateral bead section (22) and the other end thereof being connected to the standing section (19) positioned on opposite side from the standing section (19) to which the longitudinal bead section is connected.

4. The latent heat exchanger according to claim 3, wherein each segment of the panel section (18), which is surrounded by the standing section (19) and defined by the lateral bead section (22), the longitudinal bead section (23), and the additional longitudinal bead section (24), is formed to have a same area.

5. A combustion apparatus comprising the latent heat exchanger (1) according to any one of claims 1 to 4.

## Patentansprüche

1. Tauscher (1) für latente Wärme, umfassend:
einen kastenförmigen Gehäusehauptkörper (2) mit einer offenen Oberseite; einen Abgaseinlass (13), der auf einer Seite des Gehäusehauptkörpers (2) gebildet ist; einen Abgasauslass (14), der auf der anderen Seite des Gehäusehauptkörpers (2) gebildet ist; ein Wärme absorbierendes Rohr (4) zum Rückgewinnen latenter Wärme, das sich durch eine von dem Abgaseinlass (13) zum Abgasauslass (14) in dem Gehäusehauptkörper gerichtete Strömung eines Abgases erstreckend bereitgestellt ist; und eine obere Platte (3), die die Oberseite des Gehäusehauptkörpers (2) schließt,
wobei die obere Platte (3) einen Plattenabschnitt (18), der in einer Draufsicht eine rechteckige Form aufweist, einen stehenden Abschnitt (19), der entlang eines Umfangsrandes des Plattenabschnitts (13) gebildet ist, und einen Querwulstabschnitt (22) aufweist, der von dem Plattenabschnitt (18) nach oben hervorspringt und sich in eine Richtung erstreckt, entlang der das Wärme absorbierende Rohr (4) sich erstreckend bereitgestellt ist, **dadurch gekennzeichnet, dass**
vom Querwulstabschnitt (22) jedes Ende mit dem stehenden Abschnitt (19) verbunden ist; und
der Querwulstabschnitt (22) an einer Position gebildet ist, die in Bezug zu einer Position direkt über dem Wärme absorbieren Rohr (14) zu der Abgasauslassseite oder zu der Abgaseinlassseite versetzt ist.

2. Tauscher für latente Wärme nach Anspruch 1,
wobei die obere Platte (3) einen Längswulstabschnitt (23) aufweist, der von dem Plattenabschnitt (18) nach oben hervorspringt und sich in eine Richtung orthogonal zu der Richtung erstreckt, in der das Wärme absorbierende Rohr (4) sich erstreckend bereitgestellt ist, und
vom Längswulstabschnitt (23) ein Ende mit dem Querwulstabschnitt (22) verbunden ist und das andere Ende mit dem stehenden Abschnitt (19), der dem Abgasauslass (14) oder dem Abgaseinlass (13) benachbart positioniert ist, verbunden ist.

3. Tauscher für latente Wärme nach Anspruch 2, der ferner einen zusätzlichen Längswulstabschnitt (24) umfasst, der von dem Plattenabschnitt (18) nach oben hervorspringt und sich in eine Richtung orthogonal zu der Richtung erstreckt, in der das Wärme absorbierende Rohr (4) sich erstreckend bereitgestellt ist, wobei ein Ende des zusätzlichen Längswulstabschnitts (24) mit dem Querwulstabschnitt (22) verbunden ist und das andere Ende davon mit dem stehenden Abschnitt (19), der an einer dem stehenden Abschnitt (19), mit dem der Längswulstabschnitt verbunden ist, gegenüberliegenden Seite positioniert ist, verbunden ist.

4. Tauscher für latente Wärme nach Anspruch 3, wobei jedes Teilstück des Plattenabschnitts (18), das durch den stehenden Abschnitt (19) umgeben ist und durch den Querwulstabschnitt (22), den Längswulstabschnitt (23) und den zusätzlichen Längswulstabschnitt (24) definiert ist, mit der gleichen Fläche ausgebildet ist.

5. Verbrennungsvorrichtung, die den Tauscher (1) für latente Wärme nach einem der Ansprüche 1 bis 4 aufweist.

## Revendications

1. Echangeur de chaleur latente (1) comprenant :
un corps principal de caisson en forme de boîte (2) ayant un haut couvert, une entrée de gaz d'échappement (13) située sur un côté du corps principal du caisson (2), une sortie de gaz d'échappement (14) formée sur l'autre côté du corps principal du caisson (2), un tuyau absorbant la chaleur (4) permettant de récupérer la chaleur latente qui s'étend au travers d'un flux de gaz d'échappement dirigé de l'entrée (13) à la sortie des gaz d'échappement (14) dans le corps principal du caisson, et une plaque supérieure (3) qui ferme le haut du corps principal du caisson (2),
la plaque supérieure (3) ayant une section de panneau (18) de forme rectangulaire en vue en plan, une section droite (19) formée le long d'un bord périphérique de la section de panneau (18) et une section de bourrelet latérale (22) qui dépasse vers le haut de la section de panneau (18) et s'étend dans la direction le long de laquelle s'étend le tuyau absorbant la chaleur (4),
**caractérisé en ce que**
chacune des extrémités de la section de bourrelet latérale (22) est reliée à la section droite (19),
la section de bourrelet latérale (22) est formée dans une position déplacée vers le côté de sortie des gaz d'échappement ou vers le côté d'entrée des gaz d'échappement par rapport à la position située au dessus du tuyau absorbant la chaleur (14).

2. Echangeur de chaleur latente conforme à la revendication 1,
dans lequel la plaque supérieure (3) à une section de bourrelet longitudinale (23) qui dépasse vers le haut de la section de panneau (18) et s'étend dans une direction octogonale à la direction dans laquelle s'étend le tube absorbant la chaleur (4), et
l'une des extrémités de la section de bourrelet longitudinale (23) est reliée à la section de bourrelet latérale (22) et l'autre extrémité de celle-ci est reliée à la section droite (19) adjacente à la sortie des gaz d'échappement (14) ou à l'entrée des gaz d'échappement (13).

3. Echangeur de chaleur latente conforme à la revendication 2, comprenant en outre une section de bourrelet longitudinale supplémentaire (24) qui dépasse vers le haut de la section du panneau (18) et s'étend dans une direction octogonale à la direction dans laquelle s'étend le tuyau absorbant la chaleur (4), l'une des extrémités de la section de bourrelet longitudinale supplémentaire (24) étant reliée à la section de bourrelet latérale (22) et l'autre extrémité de celle-ci étant reliée à la section droite (19) située sur le côté opposé à la section droite (19) à laquelle la section de bourrelet longitudinale est reliée.

4. Echangeur de chaleur latente conforme à la revendication 3,
dans lequel chaque segment de la section du panneau (18) qui est entouré par la section droite (19) et est défini par la section de bourrelet latérale (22), la section de bourrelet longitudinale (23) et la section de bourrelet longitudinale supplémentaire (24) a la même surface.

5. Appareil de combustion comprenant un échangeur de chaleur latente (1) conforme à l'une quelconque des revendications 1 à 4.
